# EUROPÄISCHE PATENTSCHRIFT

(11) **EP 1 434 037 B1**
(45) Veröffentlichungstag und Bekanntmachung des Hinweises auf die Patenterteilung: **27.10.2010**
(21) Anmeldenummer: 04008332.1
(22) Anmeldetag: 08.02.1999
(51) Int. Cl.: G01F 11/02, G01F 15/12, A47K 5/12, B05B 11/00, B05B 15/02

(54) **Vorrichtung zur Abgabe einer Flüssigkeit sowie Ausgabekanüle hierfür**
Fluid dispenser and associated dispensing tubes
Distributeur de fluide et tubes distributeurs associés

(30) Priorität: 23.02.1998 DE 19807647
(43) Veröffentlichungstag der Anmeldung: 30.06.2004
(62) Teilanmeldung aus: 99102395.3
(73) Patentinhaber: BRAND GMBH + CO KG, 97877 Wertheim (DE)
(72) Erfinder: Fessel, Theodor, 91522 Ansbach (DE); Graf, Hans, 97892 Kreuzwertheim (DE)
(74) Vertreter: von Rohr, Hans Wilhelm

(56) Entgegenhaltungen:
- EP-A- 0 542 241
- DE-A1- 4 334 974
- US-A- 4 306 670
- US-A- 4 526 294

## Beschreibung

Die Erfindung betrifft eine Vorrichtung zur Abgabe einer Flüssigkeit mit den Merkmalen des Oberbegriffs von Anspruch 1 sowie eine Ausgabekanüle für eine solche Vorrichtung.

Die bekannte Vorrichtung zur Abgabe einer Flüssigkeit, von der die Erfindung ausgeht (WO-A-97/49974), hat eine Ausgabekanüle, die am Ventilblock der Fördereinrichtung angebracht ist und in der die Ausströmleitung ausgebildet ist. Die Ausgabekanüle ist einstückig ausgeführt und bogenförmig gestaltet, so dass die Flüssigkeit in der Ausströmleitung zunächst vom Ventilblock horizontal wegströmt und dann durch die bogenförmige Führung der Ausstromleitung vertikal nach unten umgelenkt wird.

Bekannt ist auch eine Vorrichtung, bei welcher zwischen der Ausgabekanüle und dem Ventilblock ein Dreiwegehahn sitzt (DE-C2-41 37 351), über den wahlweise eine aus dem Behälter geförderte Flüssigkeitsmenge entweder in die Ausströmleitung eingespeist oder ohne die Ausströmleitung zu durchlaufen in den Behälter zurückgeführt werden kann. Bei dieser Vorrichtung hat es sich als nachteilig erwiesen, dass ein erheblicher Teil des Ausgabebereichs der Fördereinrichtung außerhalb des Spülkreislaufs liegt.

Der Lehre liegt das Problem zugrunde, die zuvor genannte Vorrichtung zur Abgabe einer Flüssigkeit, von der die Erfindung ausgeht, hinsichtlich der Gestaltung des Ausgabebereichs zu verbessern.

Die zuvor aufgezeigte Problemstellung wird bei einer Vorrichtung mit den Merkmalen des Oberbegriffs von Anspruch 1 durch die Merkmale des kennzeichnenden Teils von Anspruch 1 gelöst. Vorteilhafte Ausgestaltungen und Weiterbildungen sind Gegenstand der Unteransprüche.

Erfindungsgemäß ist die Ausgabekanüle an ihrem vom Ventilblock abgewandten Ende mit einem Ausgusselement versehen, das in eine Abgabestellung gegenüber der Ausgabekanüle gebracht werden kann, in der die aus der Ausströmleitung austretende Flüssigkeit vertikal nach unten umgelenkt wird.

Die Rücklaufleitung ist mit der Ausströmleitung verbindbar, so dass im Rahmen eines ggf. mehrere Pumphübe umfassenden Spülvorgangs auch die Ausströmleitung vollständig gespült werden kann.

In vorteilhafter Weise sind die Ausströmleitung und die Rücklaufleitung gemeinsam in der vorzugsweise aus einem Kunststoffmaterial, oder bei einer besonders hochwertigen Ausführungsform aus Edelstahl gefertigten Ausgabekanüle ausgebildet. Eine derartige Ausgestaltung der Ausgabekanüle erweist sich insbesondere unter fertigungstechnischen Gesichtspunkten im Hinblick auf eine einfache Montage als besonders vorteilhaft und ermöglicht zudem eine effektive Aussteifung der Ausgabekanüle.

Die Ausströmleitung und die Rücklaufleitung sind vorzugsweise gleich lang ausgebildet und weisen in vorteilhafter Weise jeweils den gleichen Kanalquerschnitt auf. Insbesondere bei einer Ausführungsform der Ausgabekanüle aus einem Kunststoffmaterial weisen die beiden Leitungen in vorteilhafter Weise jeweils einen kreisförmige Querschnitt auf und sind bei einer gespritzten Ausfühningsform in Längsrichtung jeweils schwach konisch verjüngt ausgebildet. Bei dieser Ausführungsform lassen sich besonders hohe Oberflächenqualitäten hinsichtlich der die beiden Leitungen begrenzenden Leitungsinnenwandungen erreichen. Bei der Herstellung der Ausgabekanüle aus einem Strangpreßmaterial oder auch spanabhebend, beispielsweise aus einem Teflon-Halbzeug, ist die Ausstoßkanüle mit Vorteil von zylindrischer oder prismatischer Gestalt.

Die Ausströmleitung und die Rücklaufleitung sind in vorteilhafter Weise derart ausgebildet, dass in einem Austrittsbereich der Ausgabekanüle die Austrittsöffnung der Ausströmleitung einer Eintrittsöffnung der Rücklaufleitung unmittelbar benachbart angeordnet ist. Dadurch wird eine unmittelbare Überbrückung der beiden Leitungen durch eine in der Anschlußeinrichtung ausgebildete Spülverbindung möglich. Mit Vorteil sind dabei die Ausströmleitung und die Rücklaufleitung derart ausgebildet, dass deren Längsachsen zueinander parallel verlaufen. Die Ausgabekanüle ist dabei in vorteilhafter Weise derart gestaltet, dass diese in einer zur Längsachse der Ausströmleitung senkrechten Schnittebene einen kreisförmigen, elliptischen oder vorzugsweise "8"-förmigen Querschnitt aufweist.

Das Ausgußelement ist in vorteilhafter Weise mit einer Griffeinrichtung versehen zum manuellen Umschalten zwischen einer Überbrückungsposition, einer Abgabeposition und ggf. auch einer Schließposition, in welcher die Austrittsöffnung der Ausgabekanüle verschlossen ist. Die genannte Griffeinrichtung ist in vorteilhafter Weise einstückig mit dem beilspielsweise aus einem Kunststoffmaterial gebildeten Ausgußelement ausgebildet.

Das Ausgußelement ist schwenkbewegbar oder verschiebbar an der Ausgabekanüle befestigt. Die Schwenk- oder Verschiebeachse verläuft hierbei im wesentlichen in Längsrichtung der Ausgabekanüle. Das Ausgußelement ist in vorteilhafter Weise verschlußkappenartig ausgebildet und auf einer Außenumfangsfläche der Ausgabekanüle schwenkbewegbar bzw. verschiebbar gelagert.

Bei einer bevorzugten Ausführungsform der Vorrichtung ist die Ausgabekanüle an einem Ventilblock angeschlossen, in dem ein Fluidzufuhrkanal und ein Fluidrücklaufkanal ausgebildet sind, die entsprechend mit der Ausströmleitung und der Rücklaufleitung verbunden sind. Dieser Ventilblock ist dabei in vorteilhafter Weise aus einem Kunststoffmaterial durch Spritz-Formen oder spanend hergestellt. Der in dem Ventilblock gebildete Fluidzufuhrkanal und der ebenfalls in dem Ventilblock gebildete Fluidrücklaufkanal können dabei auf fertigungstechnisch besonders vorteilhafte Weise durch zylindrische Kernelemente gebildet werden, die in den zur Bildung des Ventilblocks in einem Formwerkzeug gebildeten Formraum eindringen und nach Aushärten des Kunststoffmateriales aus diesem abgezogen werden können.

Im Hinblick auf einen einfachen Aufbau eines Formwerkzeuges zur Bildung des Ventilblockes wird die Ausgabekanüle vorzugsweise als separates Bauteil ausgebildet und erst im Rahmen eines Montageschrittes in den Ventilblock eingepreßt. Dadurch wird es zum einen auf vorteilhafte Weise möglich, unterschiedliche Ausgabekanülen und ggf. auch unterschiedliche Ventilblöcke bedarfsgerecht miteinander zu kombinieren. Die Verwendung einer Press-Verbindungseinrichtung erlaubt eine besonders fest haftende, hochdichte Befestigung der Ausgabekanüle an dem Ventilblock. Alternativ dazu kann die Ausgabekanüle auch über eine Gewindeeinrichtung an dem Ventilblock angebracht werden. Hierzu ist vorzugsweise die Ausgabekanüle oder eine Überwurfmutter mit einem Gewindeabschnitt versehen.

Der Ventilblock kann auch aus einem Block-Material, beispielsweise durch spanabhebende Bearbeitung gebildet sein. Im Hinblick auf eine hohe chemische Beständigkeit besteht der Ventilblock vorzugsweise aus einem Teflon-, Polypropylen- (PP), Polyethylen- (PE) oder Polyamid-Werkstoff.

Eine besonders stabile und im Bereich des Dosierzylinderfußes hochdichte Ausführungsform der Vorrichtung ist dadurch gegeben, dass der Förder- bzw. Dosierzylinder einstückig mit dem Ventilblock ausgebildet ist. Der Förder- bzw. Dosierzylinder und der Ventilblock und ggf. auch die Ausgabekanüle können dabei im Rahmen eines einzigen Kunststoffeinspritzvorganges im Inneren eines entsprechenden Formwerkzeuges gebildet werden, so dass nach Öffnen des Formwerkzeuges eine wenigstens aus Förder- bzw. Dosierzylinder und Ventilblock bestehende Baueinheit dem Formwerkzeug entnommen werden kann. Das Formwerkzeug ist hierzu in vorteilhafter Weise wenigstens zweiteilig ausgebildet, wobei eine zwischen den beiden Formteilen verlaufende Trennfläche vorzugsweise im wesentlichen parallel zu einer Ebene verläuft, die eine Mittelachse des Förder- bzw. Dosierzylinders enthält.

Eine bei der integralen Ausbildung von Förder- bzw. Dosierzylinder und Ventilblock vorteilhafte Ausführungsform der Erfindung ist dadurch gegeben, dass der Förder- bzw. Dosierzylinder einen aus einem Glas-, Keramik-, thermoplastischen oder duroplastischen Kunststoffmaterial gebildeten Zylinder-Einsatz umfaßt, der in einem einstückig mit dem Ventilblock ausgebildeten Mantelabschnitt aufgenommen, insbesondere eingespritzt ist. Dadurch wird es auf vorteilhafte Weise möglich, eine extrem hohe Dichtwirkung zwischen der Innenwandung des Förder- bzw. Dosierzylinders und einem darin leichtgängig hin- und hergehend bewegbaren Förder- bzw. Dosierkolben sicherzustellen. Aufgrund des vorzugsweise einstückig mit dem Ventilblock ausgebildeten Mantelabschnittes ist für den Zylinder-Einsatz eine effektive Verstärkung und ein effektiver Splitter-Schutz gegeben.

Eine im Hinblick auf eine hohe Materialersparnis vorteilhafte Ausführungsform der Erfindung ist dadurch gegeben, dass der Ventilblock als Skelettkonstruktion mit beabstandeten Stegen ausgebildet ist Diese zueinander beabstandeten Stege verlaufen dabei in vorteilhafter Weise im wesentlichen parallel zu einer Mittelachse des Förder- bzw. Dosierzylinders. Die einzelnen Stege können zur weiteren Aussteifung des Ventilblockes durch weitere, fachwerkartig angeordnete Querverbindungsstege ausgesteift sein. Um eine besonders stabile Befestigung der Ausgabekanüle an einem derartigen, als Skelettkonstruktion ausgebildeten Ventilblock zu erreichen, ist in vorteilhafter Weise eine Aufnahmeausnehmung zur Aufnahme eines Fußabschnittes der Ausgabekanüle derart angeordnet, dass diese einen der sich axial erstreckenden Stege radial durchsetzt. Eine Mittelachse der vorzugsweise zylindrischen Aufnahmeausnehmung verläuft dabei in vorteilhafter Weise in einer entsprechenden Mittelebene des sich axial erstreckenden Versteifungssteges.

Die Aufnahmeausnehmung ist dabei in vorteilhafter Weise in einem topfartigen Wandungsabschnitt aufgenommen. Dieser topfartige Wandungsabschnitt kann zusätzlich durch weitere, beispielsweise radiale Querversteifungsstege noch weiter ausgesteift werden.

Um eine positionsgenaue Befestigung der Ausgabekanüle an dem Ventilblock zu ermöglichen, ist in vorteilhafter Weise durch entsprechende Abschnitte des Ventilblockes und der Ausgabekanüle eine Positioniereinrichtung gebildet, durch die die Befestigungsposition der Ausgabekanüle an dem Ventilblock eindeutig festgelegt ist. Diese Positioniereinrichtung kann dabei entweder einen kanülenseitig ausgebildeten Eingriffsabschnitt aufweisen, der mit einem ventilblockseitig ausgebildeten Eingriffsgegenabschnitt in Eingriff bringbar ist, oder einen an dem Ventilblock im Bereich der Aufnahmeausnehmung ausgebildeten Eingriffsabschnitt aufweisen, der mit einem kanülenseitig ausgebildeten Eingriffsgegenabschnitt in Eingriff bringbar ist.

Um eine besonders hohe Dichtwirkung und um einen besonders festen Sitz der Ausgabekanüle in dem Ventilblock sicherzustellen, sind an einem Befestigungsabschnitt der Ausgabekanüle vorzugsweise mehrere Dichtlamellen ausgebildet, die unter hoher Flächenpressung mit einem entsprechenden Innen-Umfangsabschnitt einer in dem Ventilblock gebildeten Aufbahmeausnehmung in Kontakt treten.

Gegenstand der Erfindung ist auch eine Ausgabekanüle für einen solchen erfindungsgemäßen Flüssigkeits-Dosierspender, wie sie im Anspruch 22 genannt ist. Diesbezügliche vorteilhafte Ausgestaltungen und Weiterbildungen sind Gegenstand der danach folgenden Unteransprüche.

Die Erfindung wird nachstehend anhand von Ausführungsbeispielen und zugehörigen Zeichnungen näher erläutert. In diesen zeigen:
- Fig. 1: eine in Integralbauweise gebildete Ausgabekanüle mit parallel ne- beneinander verlaufenden Ausström- bzw. Rücklaufleitungen;
- Fig. 2a: einen Axialschnitt durch eine in einen Sockelbereich eines Dosier- Dispensers eingesetzte Ausgabekanüle, wobei die Ausgabekanüle im Bereich ihrer Austrittsöffnung mit einem Ausgußelement verse- hen ist, das sich hier in einer Abgabeposition befindet;
- Fig. 2b: eine Axialschnittansicht durch die gleiche Ausgabekanüle sowie durch das gleiche Ausgußelement, wobei das Ausgußelement sich jedoch hier in einer Spül-Position befindet;
- Fig. 3a: eine Detail-Axialschnittansicht und eine vereinfachte, zugehörige Seitenansicht des Ausgußelementes in Abgabeposition,
- Fig.3b: eine Detail-Axialschnittansicht und eine vereinfachte, zugehörige Seitenansicht des Ausgußelementes in Spülposition,
- Fig.4: eine Axialschnittansicht durch einen Dosier-Dispenser mit integral ausgebildetem Förder- bzw. Dosierzylinder und einer Ausabekanüle mit integral eingeformter Rücklaufleitung.

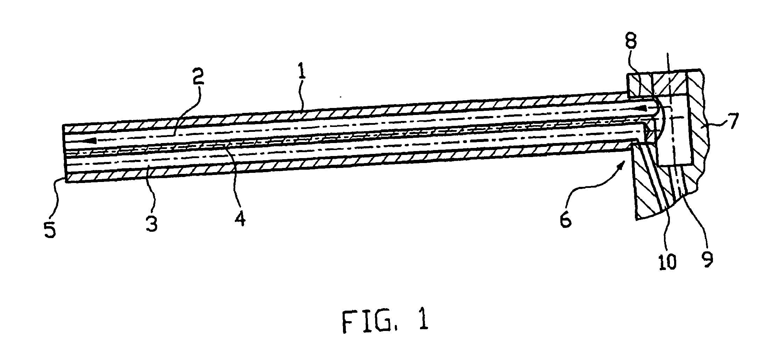

Die in Fig.1 dargestellte Ausgabekanüle umfaßt einen Grundkörper 1, der vorzugsweise aus einem Kunststoffmaterial gefertigt ist. In dem Grundkörper 1 sind sowohl eine Ausströmleitung 2 als auch eine Rücklaufleitung 3 ausgebildet. Die Ausströmleitung 2 und die Rücklaufleitung 3 sind durch einen Trennwandabschnitt 4, der einstückig mit dem Grundkörper 1 ausgebildet ist, voneinander getrennt. Sowohl die Ausströmleitung 2 als auch die Rücklaufleitung 3 weisen einen kreisförmigen Querschnitt auf und münden bei der hier dargestellten Ausführungsform in eine plan ausgebildete Stirnfläche 5.

Auf einer der Stirnfläche 5 abgewandten Seite des Grundkörpers 1 ist die Ausgabekanüle mit einem Befestigungsabschnitt 6 versehen, über welchen die Ausgabekanüle an einem hier durch das Bezugszeichen 7 bezeichneten Ventilblock anbringbar ist. Der Befestigungsabschnitt 6 umfaßt bei der hier dargestellten Ausführungsform einen im wesentlichen zylindrischen Einpreßzapfenabschnitt 8, der in enger Passung, abdichtend in eine entsprechend ausgebildete Paßbohrung des Ventilblocks 7 eingepreßt ist. Alternativ zu der dargestellten Ausführungsform des Befestigungsabschnittes 6 ist es auch möglich, die Ausgabekanüle integral mit dem Ventilblock 7 auszubilden oder beispielsweise über eine Gewindeeinrichtung mit dem Ventilblock 7 zu verbinden. Die Gewindeeinrichtung ist mit Vorteil derart gestaltet, dass im festgezogenen Zustand zwischen den Gewindeflanken kein Hohlraum verbleibt. Dies kann insbesondere durch ein schwach konisches Gewinde erreicht werden.

In dem hier nur abschnittsweise dargestellten Ventilblock 7 sind ein Fluidzufuhrkanal 9 sowie ein Fluidrücklaufkanal 10 ausgebildet.

Der Fluidzufuhrkanal 9 umfaßt ein hier nicht dargestelltes Saugventil und mündet über eine stirnseitig in dem Befestigungsabschnitt 6 ausgebildete Durchgangsöffnung in die Ausströmleitung 2. Die in dem Grundkörper 1 ausgebildete Rücklaufleitung 3 steht über eine, den Befestigungs- bzw. Einpreßzapfenabschnitt 8 oder Gewindezapfenabschnitt radial durchsetzende Durchgangsbohrung mit dem Fluidrücklaufkanal 10 in Verbindung. Der Fluidrücklaufkanal 10 ist hier als im wesentlichen geradliniger Kanal ausgebildet und erstreckt sich schwach geneigt von einem unteren Bereich des Ventilblockes 7 zu dem Befestigungsabschnitt 8. Durch die hohe Flächenpressung zwischen dem Befestigungsabschnitt 8 und der Innenwandung der in dem Ventilblock 7 ausgebildeten Befestigungsbohrung wird eine hohe Dichtigkeit des Übergangsbereiches zwischen der Rücklaufleitung 3 und dem in dem Ventilblock 7 ausgebildeten Fluidrücklaufkanal 10 erreicht.

Bei der hier dargestellten Ausführungsform sind die Ausströmleitung 2 und die Rücklaufleitung 3 in nebeneinanderliegender Weise ausgebildet. Es ist auch möglich, die Ausströmleitung 2 und die Rücklaufleitung 3 zueinander koaxial auszubilden, so dass eine der beiden Leitungen durch einen entsprechend dimensionierten Ringraum gebildet ist. Die Rücklaufleitung 3 erstreckt sich durchgängig ununterbrochen von der Austrittsöffnung der Ausströmleitung 2 zurück zu dem Ventilblock 7.

Eine vollständige Spülung der Ausströmleitung 2 kann beispielsweise dadurch erreicht werden, dass auf den Grundkörper 1 im Bereich der Stirnfläche 5 ein Kappenelement aufgesetzt wird, das eine Verbindung zwischen der Ausströmleitung 2 und der Rücklaufleitung 3 herstellt.

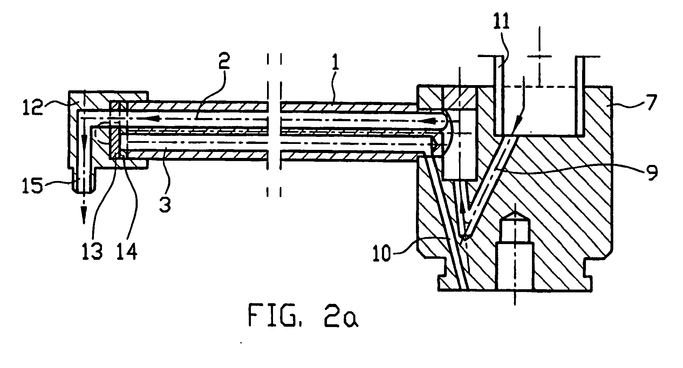

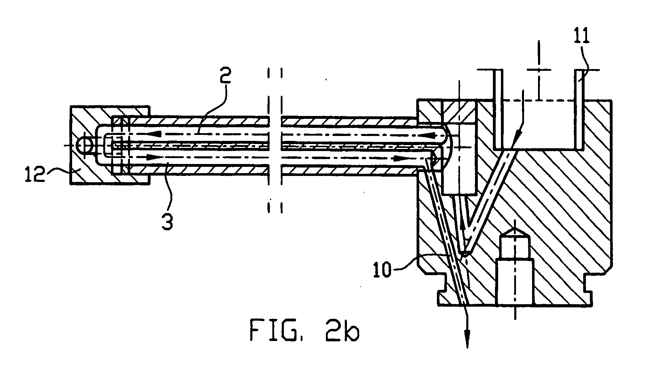

Anstelle einer derartigen Überbrückungseinrichtung kann ein Ausgußelement 12 verwendet werden, wie dies nachfolgend in Verbindung mit den Fig.2a und 2b beschrieben wird.

Die Darstellungen gemäß den Fig.2a und 2b sind abgesehen von jeweils unterschiedlichen Schaltstellungen des Ausgußelementes 12 identisch.

Abweichend von der Darstellung gemäß Fig.1 ist der zur Aufnahme der Ausgabekanüle vorgesehene Ventilblock 7 mit einem durch das Bezugszeichen 11 bezeichneten (nur teilweise dargestellten) Förder- bzw. Dosierzylinder hier vollständig gezeigt. Die hier dargestellte Ausgabekanüle ist an dem Ventilblock 7 in gleicher Weise befestigt, wie dies vorab bereits in Verbindung mit Fig.1 erläutert wurde.

An ihrem, dem Ventilblock 7 abgewandten Ende ist die Ausgabekanüle mit einem Ausgußelement 12, das schwenkbewegbar oder verschiebbar an dem Grundkörper 1 angebracht ist, versehen. In der hier dargestellten Position befindet sich das Ausgußelement in einer Abgabestellung und gestattet die Abströmung eines durch den Förder- bzw. Dosierzylinder zunächst über eine hier nicht dargestellte Ansaugleitung angesaugten Fluides über den Fluidzufuhrkanal 9 und die Ausströmleitung 2. Um eine besonders leichtgängige Bewegung des Ausgußelementes 12 relativ zu dem Grundkörper 1 zu ermöglichen, und um ferner eine zuverlässige Abdichtung der Eintrittsmündung der Rücklaufleitung 3 zu ermöglichen, sind zwischen dem Ausgußelement 12 und dem Grundkörper 1 zwei Gleitscheiben 13, 14 vorgesehen, die über das Ausgußelement 12 und eine hier nicht näher dargestellte Eingriffsstruktur zwischen dem Ausgußelement 12 und dem Grundkörper 1 in enger Anlage an der in Fig.1 mit dem Bezugszeichen 5 bezeichneten Stirnfläche gehalten sind.

Die Gleitscheiben 13, 14 sind vorzugsweise aus einem Glas-, Kunststoff- oder Keramikmaterial gebildet und mit Durchgangsöffnungen versehen, die je nach Position des Ausgußelementes 12 in Deckung bringbar sind.

Das Ausgußelement 12 ist bei der hier dargestellten Ausführungsform um eine parallel zur Mittelachse des Grundkörpers 1 der Ausgabekanüle verlaufende Schwenkachse schwenkbewegbar. In dem Ausgußelement 12 ist eine kurze Umlenkbohrung 15 oder Umlenkkanal ausgebildet, über welche das aus der Ausströmleitung 2 austretende Fluid umgelenkt wird.

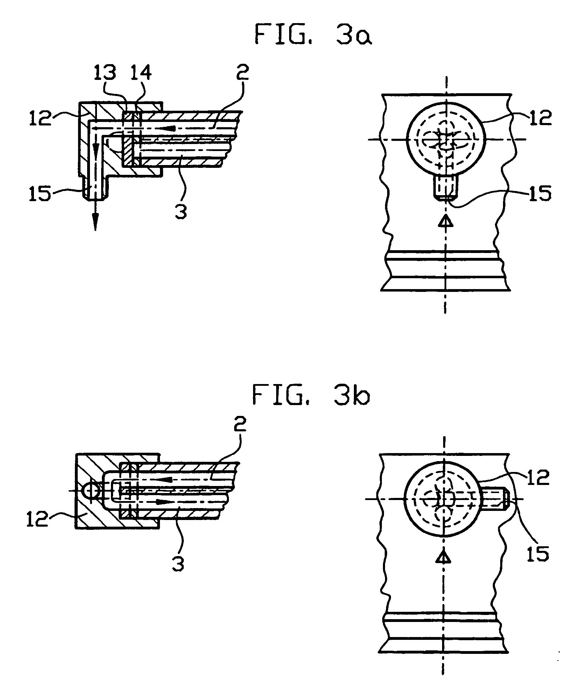

Bei der in Fig.2b dargestellten Funktionsposition des Ausgußelementes 12 überbrückt dieses die Ausströmleitung 2 und die Rücklaufleitung 3 und ermöglicht dadurch den vereinfacht durch Pfeile angedeuteten Fluidstrom von dem Förder- bzw. Dosierzylinder 11 zurück in einen hier nicht dargestellten Behälter bzw. vergleichbare Sammeleinrichtung. Dadurch wird es beispielsweise möglich, eine größere Fluidmenge über den Förder- bzw. Dosierzylinder 11 und durch die Ausgabekanüle hindurch zu fördern, wodurch sichergestellt ist, dass sich in der Ausgabekanüle kein mittlerweile gealtertes oder beispielsweise durch Trocknung hinsichtlich seiner Konzentration verändertes Fluid befindet. Der Aufbau und die Funktionsweise des vorangehend beschriebenen Ausgußelementes 12 werden nachfolgend in Verbindung mit den Figuren 3a und 3b noch näher erläutert.

Bei der Prinzipdarstellung gem. Fig.3a befindet sich das Ausgußelement 12 in der bereits in Verbindung mit Fig.2a erläuterten Schaltposition. Eine in dem Ausgußelement 12 gebildete Umlenkbohrung 15 bzw. der Umlenkkanal weist dabei in Abgabeposition in vertikaler Richtung nach unten. In dieser Schaltposition des Ausgußelementes 12 geraten die in den Gleitscheiben 13 und 14 gebildeten Durchgangsbohrungen derart in Deckung, dass das zugeführte Fluid aus der Ausströmleitung 2 abfließen kann. Wird nunmehr das Ausgußelement 12 aus der in Fig.3a dargestellten Schaltposition in die in Fig.3b dargestellte Schaltposition geschwenkt, so wird die in der Ausgabekanüle gebildete Ausströmleitung 2 mit der Rücklaufleitung 3 verbunden, wodurch ein vollständiger Fluid-Austausch des in der Ausströmleitung 2 zunächst befindlichen Fluides möglich wird.

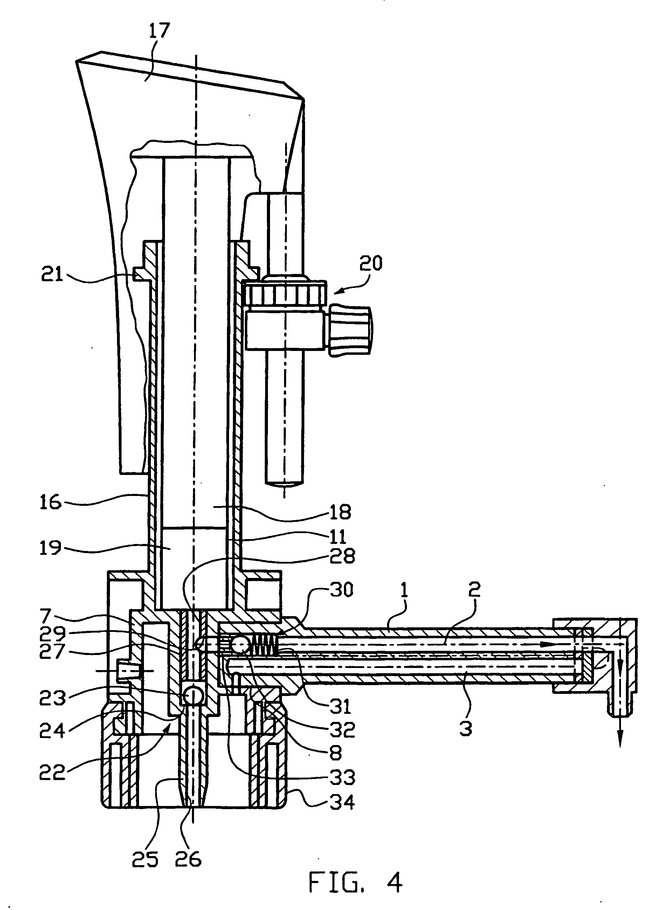

Die Darstellung gemäß Fig.4 zeigt eine Axialschnittansicht durch einen Dosierdispenser mit einem integral mit dem Ventilblock 7 ausgebildeten Förder- bzw. Dosierzylinder 11, wobei der Förder- bzw. Dosierzylinder 11 in einem einstückig mit dem Ventilblock 7 ausgebildeten Mantelabschnitt 16 aufgenommen ist. In dem Förder- bzw. Dosierzylinder 11 ist ein mittels einer Handgriffeinrichtung 17 in vertikaler Richtung auf- und abwärts bewegbarer Förder- bzw. Dosierkolben 18 aufgenommen. Der Förder- bzw. Dosierkolben ist bei der hier dargestellten Ausführungsform als Präzisionsgeschliffener Kolben ausgebildet und begrenzt einen in dem Förder- bzw. Dosierzylinder 11 hinsichtlich seines Volumens veränderbaren Förder- bzw. Dosierraum 19. Mittels einer Einstelleinrichtung 20 kann der zulässige Hub des Förder- bzw. Dosierkolbens 18 und damit das Maximal-Volumen des Förder- bzw. Dosierraumes 19 eingestellt werden. Die Einstelleinrichtung 20 wirkt dabei mit einem Anschlag 21 zusammen, der einstückig mit dem Mantelabschnitt 16 ausgebildet ist. Der Anschlag 21 umgibt einen oberen Endbereich des Förder- bzw. Dosierzylinders 11 und bildet zudem ein Verstärkungsglied zur Verstärkung der oberen Öffnung des Förder- bzw. Dosierzylinders 11.

In dem Ventilblock 7 ist ein Behälterventil 22 vorgesehen, das bei der hier dargestellten Ausführungsform eine Ventilkugel 23 umfaßt, die auf einem Präzisionsventilsitz 24 aufsitzt, der bei der hier dargestellten Ausführungsform durch einen präzisionsgeformten Oberflächenabschnitt des Ventilkörpers 7 gebildet ist. Unterhalb des Behälterventiles 22 erstreckt sich ein in einem Schlauchzapfen 25 gebildeter Ansaugkanal 26. Der Öffnungshub der Ventilkugel 23 wird durch ein Buchsenelement 27 begrenzt, das durch den Förder- bzw. Dosierzylinder 11 hindurch in den Ventilblock 7 eingepreßt ist.

Das Buchsenelement 27 bildet einen Fluiddurchgangsweg 28, der den Ansaugkanal 26 über das Behälterventil 22 mit dem Förder- bzw. Dosierraum 19 verbindet. Das Buchsenelement 27 ist mit einer radialen Durchgangsöffnung 29 versehen, die den Fluiddurchgangsweg 28 mit einem in dem Grundkörper 1 der Ausgabekanüle aufgenommenen Ventil 30 verbindet. Das in dem Grundkörper 1 aufgenommene Ventil 30 umfaßt eine mittels einer Feder 31 in eine Schließstellung gedrängte Ventilkugel 32 und ein in den Grundkörper 1 der Ausgabekanüle eingepreßtes Ventilsitzelement 33, das bei der hier dargestellten Ausführungsform aus einem Kunststoff-, Glas- bzw. Keramikmaterial gebildet ist.

Die genannte Ventilfeder 31 sitzt in der, in der Ausgabekanüle gebildeten Ausströmleitung 2, die sich durchgängig von dem Ventil 30 bis zu ihrer Austrittsöffnung erstreckt.

Die Austrittsöffnung der Ausströmleitung 2 ist unmittelbar benachbart der Eintrittsöffnung der Rücklaufleitung 3 angeordnet. Die in der Ausgabekanüle verlaufende Rücklaufleitung 3 weist im wesentlichen die gleiche Länge auf wie die in der Ausgabekanüle ausgebildete Ausströmleitung 2. Die Ausgabekanüle ist in den Ventilblock 7 über den Einpreßzapfenabschnitt 8 eingepreßt. Der Einpreßzapfenabschnitt 8 ist mit einer radialen Durchgangsbohrung versehen, die mit einer in dem Ventilblock ausgebildeten Fluidwegeinrichtung verbunden ist, über welche etwaig über die Rücklaufleitung gefördertes Fluid in den Behälter zurückgelangen kann.

Der Ventilblock 7 ist hier als Skelettkonstruktion ausgebildet und mittels einer Überwurfmutter 34 an einem Behälter oder beispielsweise auch an einem Versorgungssockel einer automatisch betätigten Dosiervorrichtung anbringbar. Alternativ zu der hier dargestellten Ausführungsform mit eingepreßter Ausgabekanüle ist es in vorteilhafter Weise auch möglich, die Ausgabekanüle, den Ventilblock 7 und den Mantelabschnitt 16 einstückig, d.h. als Integralteil auszubilden. Bei einer entsprechenden Integral-Ausführungsform entfällt in vorteilhafter Weise das Ventilsitzelement 33, und eine entsprechende Ventilsitzfläche wird durch eine Umfangswandung der, das Buchsenelement 27 radial durchsetzenden Durchgangsbohrung gebildet. Die Ventilkugel 32 und ggf. auch die Ventilfeder 31 können dabei entweder vor Einpressen des Buchsenelementes 27 in den Ventilblock 7 eingesetzt werden, oder alternativ dazu durch die Ausströmleitung 2 hindurch in den Ventilblock 7 eingeführt werden. Insbesondere bei dieser Integralausführungsform sind die Ausströmleitung 2 und die Rücklaufleitung 3 koaxial zueinander ausgebildet, wobei vorzugsweise die Ausströmleitung 2 die Rücklaufleitung 3 umgibt.

Die Erfindung ist nicht auf die vorangehend beschriebenen Ausführungsformen beschränkt. Beispielsweise ist es auch möglich, insbesondere bei einer Ausführungsform der Ausgabekanüle mit koaxial angeordneten Kanälen das Ausgußelement in die Ausgabekanüle einzustecken. Es ist auch möglich, das Ausgußelement als von der Ausgabekanüle abnehmbare Kappe auszugestalten, und beispielsweise durch entsprechendes Aufstecken des Ausgußelementes entweder eine Verbindung zwischen der Ausströmleitung und der Rücklaufleitung zu erzeugen, oder eine Fluidableitung aus der Ausströmleitung zuzulassen.

Es ist auch möglich, die Ausgabekanüle gekrümmt auszubilden, so dass die im Austrittsbereich der Auströmleitung befindliche Austrittsöffnung in Gebrauchsposition einer entsprechenden Vorrichtung nach unten weist. Es ist auch möglich, die Ausgabekanüle im Bereich ihrer Stirnfläche 5 zu verschließen und insbesondere bezüglich der Ausströmleitung eine Fluidableitung durch eine radiale, die Umfangswandung der Ausgabekanüle durchsetzende Bohrung vorzunehmen. Bei einer derartigen Ausführungsform der Ausgabekanüle bildet in vorteilhafter Weise die in Gebrauchsposition unten liegende bzw. bei koaxialer Kanalanordnung die außen liegende Fluidwegeinrichtung die Ausströmleitung.

Es ist auch möglich, in dem, in den Behälter zurückführenden Fluidweg ein Ventil, insbesondere ein Kugelventil vorzusehen, das einen Fluid-Austritt, beispielsweise aufgrund einer Druckänderung in dem Behälter, verhindert. Dieses Ventil ist in vorteilhafter Weise im Bereich der Eintrittsmündung der Rücklaufleitung oder auch in dem Ventilblock angeordnet. Das Ausgußelement ist in vorteilhafter Weise derart ausgebildet, dass dieses in eine Nicht-Gebrauchsstellung bringbar ist, in welcher die beiden in der Ausgabekanüle ausgebildeten Leitungen nach außen hin abgesperrt sind.

## Patentansprüche

1. Vorrichtung zur Abgabe einer Flüssigkeit mit einer Fördereinrichtung, mit einem Förder- oder Dosierzylinder (11),
mit einem in dem Förder- oder Dosierzylinder (11) hin und her bewegbaren Förder- oder Dosierkolben (18), der in dem Förder- oder Dosierzylinder (11) einen volumenveränderlichen Förder- oder Dosierraum (19) begrenzt, zum Fördern oder Dosieren der Flüssigkeit aus einem Behälter zu einer Ausströmleitung (2)
mit einer Ausströmöffnung, an der die geförderte Flüssigkeit aus der Ausströmleitung (2) austritt,
mit einer Rücklaufleitung (3) zum Rückseiten der Flüssigkeit zurück in den Behälter,
mit einer Einstelleinrichtung (20) zur Hubeinstellung des Förder- oder Dosierkolbens (18),
mit einem Ventilblock (7), mit dem der Förder- oder Dosierzylinder (11) verbunden ist, und der einerseits mit einem Behälterventil (22) zum Ansaugen von Flüssigkeit in den Förder- oder Dosierzylinder (11) und andererseits mit einem Ventil (30) zum Fördern von Flüssigkeit aus dem Förder- oder Dosiercylinder (11) in die Ausströmleitung (2) gekoppelt ist, und
mit einer Ausgabekanüle, die an dem Ventilblock (7) angebracht und in der die Ausströmleitung (2) ausgebildet ist,
**dadurch gekennzeichnet,**
**dass** die Ausgabekanüle an ihrem vom Ventilblock (7) abgewandten Ende mit einem Ausgusselement (12) versehen ist, das schwenkbar oder verschiebbar an einem die Ausströmleitung (2) enthaltenden Grundkörper (1) der Ausgabekanüle angebracht ist,
**dass** in dem Ausgusselement (12) ein kurzer Umlenkkanal (15) ausgebildet ist,
**dass** in einer Abgabestellung des Ausgusselements (12) der Umlenkkanal (15) die aus der Ausströmleitung (2) austretende Flüssigkeit vertikal nach unten umlenkt und
**dass** in einer Überbrückungsstellung des Ausgusselementes (12) die Ausströmleitung (2) mit der Rücklaufleitung (3) verbunden ist.

2. Vorrichtung nach Anspruch 1, **dadurch gekennzeichnet,**
**dass** die Rücklaufleitung (3) sich entlang der Ausströmleitung (2) erstreckt und vorzugsweise in der Ausgabekanüle neben der Ausströmleitung (2) ausgebildet, insbesondere in die Ausgabekanüle integral eingeformt ist.

3. Vorrichtung nach Anspruch 1 oder 2, **dadurch gekennzeichnet,**
**dass** die Ausströmleitung (2) und die Rücklaufleitung (3) koaxial in der Ausgabekanüle ausgebildet sind.

4. Vorrichtung nach einem der Ansprüche 1 bis 3, **dadurch gekennzeichnet,**
**dass** das den Umlenkkanal (15) bildende Ausgusselement (12) auf den Grundkürper (1) der Ausgabekanüle aufgesteckt ist.

5. Vorrichtung nach einem der Ansprüche 1 bis 4, **dadurch gekennzeichnet,**
**dass** der Ventilblock (7) über einer Überwurfmutter (34) mit dem Behälter verbindbar ist.

6. Vorrichtung nach einem der Ansprüche 1 bis 5, **dadurch gekennzeichnet,**
**dass** die Ausströmleitung (2) und die Rücklaufleitung (3) im Wesentlichen gleich lang ausgebildet sind.

7. Vorrichtung nach einem der Ansprüche 1 bis 6, **dadurch gekennzeichnet,**
**dass** die Austrittsöffnung der Ausströmleitung (2) benachbart zu einer Eintrittsöffnung der Rücklaufleitung (3) angeordnet ist.

8. Vorrichtung nach einem der Ansprüche 1 bis 7, **dadurch gekennzeichnet,**
**dass** das Ausgusselement (12) mit einer Griffeinrichtung (17) versehen ist, zum manuellen Umschalten zwischen der Überbrückungsstellung und der Abgabestellung.

9. Vorrichtung nach Anspruch 8, **dadurch gekennzeichnet,**
**dass** das Ausgusselement (12) in eine Schließposition, in der die Ausgabekanüle nach außen hin abgesperrt ist, schaltbar ist.

10. Vorrichtung nach einem der Ansprüche 1 bis 9, **dadurch gekennzeichnet,**
**dass** das Ausgusselement (12) um eine Schwenkachse schwenkbewegbar ist, die im Wesentlichen in Längsrichtung der Ausgabekanüle verläuft.

11. Vorrichtung nach einem der Ansprüche 1 bis 10, **dadurch gekennzeichnet,**
**dass** in dem Ventilblock (7) ein Flüssigkeitszuführkanal (9) und ein Flüssigkeitsrücklaufkanal (10) ausgebildet sind, die entsprechend mit der Ausströmleitung (2) und der Rücklaufleitung (3) verbunden sind.

12. Vorrichtung nach einem der Ansprüche 1 bis 11, **dadurch gekennzeichnet,**
**dass** in dem in den Behälter zurückführenden Flüssigkeitsweg ein Ventil, insbesondere Kugelventil, angeordnet ist.

13. Vorrichtung nach einem der Ansprüche 1, bis 12, **dadurch gekennzeichnet,**
**dass** die Ausgabekanüle in den Ventilblock (7) eingepresst ist.

14. Vorrichtung nach einem der Ansprüche 1 bis 13, **dadurch gekennzeichnet,**
**dass** der Förder- bzw. Dosierzylinder (11) einstückig mit dem Ventilblock (7) ausgebildet ist.

15. Vorrichtung nach Anspruch 14, **dadurch gekennzeichnet,**
**dass** der Förder- bzw. Dosierzylinder (11) einen aus einem Glas-, Keramik-, thermoplastischen oder duroplastischen Kunststoffmaterial gebildeten Zylinder-Einsatz umfasst, der in einem einstückig mit dem Ventilblock (7) ausgebildeten Mantelabschnitt (16) aufgenommen, insbesondere eingespritzt ist.

16. Vorrichtung nach einem der Ansprüche 1 bis 13, **dadurch gekennzeichnet,**
**dass** der Förder- bzw. Dosierzylinder (11) in den Ventilblock (7) eingeschraubt ist.

17. Vorrichtung nach einem der Ansprüche 1 bis 16, **dadurch gekennzeichnet,**
**dass** der Ventilblock (7) als Skelettkonstruktion mit beabstandeten Stegen ausgebildet ist.

18. Vorrichtung nach Anspruch 17, **dadurch gekennzeichnet,**
**dass** der Ventilblock (7) mit einer Aufnahmeausnehmung versehen ist zur Ausnahme eines Fußabschnittes der Ausgabekanüle, wobei die Aufnahmeausnehmung an dem Ventilblock (7) derart ausgebildet ist, dass diese einen sich in einer Axial-Ebene erstreckenden Steg radial durchsetzt.

19. Vorrichtung nach einem der Ansprüche 1 bis 18, **dadurch gekennzeichnet,**
**dass** eine Ausgabekanülen-Positioniereinrichtung vorgesehen ist zur Festlegung der Position der Ausgabekanüle an dem Ventilblock (7).

20. Vorrichtung nach Anspruch 19, **dadurch gekennzeichnet,**
**dass** die Ausgabekanülen-Positioniereinrichtung einen kanülenseitig ausgebildeten Eingriffsabschnitt (8) aufweist, der mit einem ventilblockseitig ausgebildeten Eingriffsgegenabschnitt in Eingriff bringbar ist.

21. Vorrichtung nach Anspruch 18, **dadurch gekennzeichnet,**
**dass** an dem Ventilblock (7) im Bereich der Aufnahmeausnehmung ein Eingriffsabschnitt ausgebildet ist, der mit einem Eingriffsgegenabschnitt der Ausgabekanüle in Eingriff bringbar ist.

22. Ausgabekanüle für einen Flüssigkeits-Dosierdispenser nach einem der Ansprüche 1 bis 21, mit einer ersten Kanaleinrichtung (2) zur Abgabe einer Flüssigkeit über eine Austrittsöffnung und einer zweiten Kanaleinrichtung (3), die sich entlang der ersten Kanaleinrichtung (2) erstreckt, wobei die Kanaleinrichtungen (2, 3) in der Ausgabekanüle vorgesehen und beide Kanaleinrichtungen (2, 3) zur Überführung einer durch die erste Kanaleinrichtung (2) geförderten Flüssigkeit in die zweite Kanaleinrichtung (3) im Bereich der Austrittsöffnung verbindbar sind,
**dadurch gekennzeichnet,**
**dass** im Bereich der Austrittsöffnung der ersten Kanaleinrichtung (2) ein Ausgusselement (12) vorgesehen ist, das schwenkbar oder verschiebbar an einem die Ausströmleitung (2) enthaltenden Grundkörper (1) der Ausgabekanüle angebracht ist,
**dass** in dem Ausgusselement (12) ein kurzer Umlenkkanal (15) ausgebildet ist,
**dass** in einer Abgabestellung des Ausgusselements (12) der Umlenkkanal (15) die aus der Ausströmleitung (2) austretende Flüssigkeit umlenkt und
**dass** das Ausgusselement (12) in eine Überbrückungsstellung bringbar ist, in welcher die aus der Austrittsöffnung der ersten Kanaleinrichtung (2) abströmende Flüssigkeit in die zweite Kanaleinrichtung (3) rückführbar ist.

23. Ausgabekanüle nach Anspruch 22, **dadurch gekennzeichnet,**
**dass** die Ausgabekanüle einen langgestreckten Grundkörper (I) aufweist, an dessen einem Ende die Austrittsöffnung ausgebildet ist.

24. Ausgabekanüle nach Anspruch 23, **dadurch gekennzeichnet,**
**dass** der Grundkörper (1) eine plane Stirnfläche (5) aufweist und dass das Ausgusselement (12) auf die plane Stirnfläche (5) aufgesetzt ist, wobei, vorzugsweise, in der Stirnfläche (5) des Grundkörpers (1) und in einer Stirnfläche des Ausgusselementes (12) Kanäle ausgebildet sind.

25. Ausgabekanüle nach Anspruch 24, **dadurch gekennzeichnet,**
**dass** zwischen dem Ausgusselement (12) und der planen Stirnfläche (5) wenigstens eine Gleitscheibe (13, 14) vorgesehen ist, wobei die Gleitscheibe (13, 14) eine Durchgangsöffnung aufweist, die wahlweise eine Fluidverbindung zwischen der Austrittsöffnung der Ausströmleitung (2) und der Rücklaufleitung (3) bildet.

26. Ausgabekanüle nach einem der Ansprüche 23 bis 25, **dadurch gekennzeichnet,**
**dass** die erste und die zweite Kanaleinrichtung (2, 3) zueinander parallel ausgebildet sind, insbesondere integral in den Grundkörper (1) eingeformt sind, insbesondere die die erste und die zweite Kanaleinrichtung jeweils definierende Wandung durch den Grundkörper (1) gebildet ist.

27. Ausgabekanüle nach einem der Ansprüche 23 bis 26, **dadurch gekennzeichnet,**
**dass** der Grundkörper (1) an seinem der Austrittsöffnung abgewandten Ende einen Verbindungsabschnitt (6) aufweist, über welchen der Grundkörper (1) mit einem Ventilblock (7) des Dosierdispensers verbindbar ist.

28. Ausgabekanüle nach Anspruch 27, **dadurch gekennzeichnet,**
**dass** wenigstens eine der ersten und zweiten Kanaleinrichtungen im Bereich des Verbindungsabschnittes (6) einen stirnseitigen Endabschnitt des Grundkörpers (1) oder eine Umfangsaußenfläche des Grundkörpers (1) durchsetzt.

29. Ausgabekanüle nach Anspruch 27 oder 28, **dadurch gekennzeichnet,**
**dass** der Verbindungsabschnitt (6) der Ausgabekanüle als Einpresszapfenabschnitt (8) oder Gewindezapfen ausgebildet ist.

30. Ausgabekanüle nach einem der Ansprüche 23 bis 29, **dadurch gekennzeichnet,**
**dass** die erste, zur Abgabe der Flüssigkeit über die Austrittsöfnung vorgesehene Kanaleinrichtung (2) den stirnseitigen Endabschnitt des Grundkörpers (1) durchsetzt und über die dabei gebildete Eintrittsmündung mit einem in dem Ventilblock (7) gebildeten Fluidzufuhrkanal (9) in Fluidverbindung steht und/oder
die zweite, die Rücklaufleitung (3) bildende Kanaleinrichtung die Umfangsaußenfläche des Grundkörpers (1) im Bereich eines Befestigungsabschnittes durchsetzt und die so gebildete Rücklaufmündung mit einem, in dem Ventilblock (7) gebildeten Fluidrücklaufkanal (10) in Fluidverbindung steht.

## Claims

1. Device for dispensing a liquid using a delivery mechanism,
with a delivering or dosing cylinder (11),
with a delivering or dosing plunger (18) which is movable to and fro in the delivering or dosing cylinder (11) and which delimits, within the delivering or dosing cylinder (11), a delivering or dosing space (19) of variable volume, for delivering or dosing the liquid from a container to an outlet conduit (2),
with an outlet opening where the delivered liquid emerges from the outlet conduit (2),
with a return conduit (3) for returning the liquid to the container,
with an adjustment mechanism (20) for adjusting the stroke of the delivering or dosing plunger (18),
with a valve block (7) to which the delivering or
dosing cylinder (11) is connected and which is coupled, on the one hand, to a container valve (22) for sucking liquid into the delivering or
dosing cylinder (11) and, on the other hand, to a valve (30) for delivering liquid from the delivering or dosing cylinder (11) into the outlet conduit (2), and
with a discharge tube which is mounted on the valve block (7) and in which the outlet conduit (2) is formed.
**characterized in that**
the discharge tube, at its end directed away from the valve block (7), is provided with a spout element (12) which is mounted pivotably or displaceably on a main body (1) of the discharge tube containing the outlet conduit (2),
a short diversion channel (15) is formed in the spout element (12),
the diversion channel (15), in a dispensing position of the spout element (12), causes the liquid emerging from the outlet conduit (2) to be diverted vertically downwards, and
the outlet conduit (2) is connected to the return conduit (3) in a bypass position of the spout element (12).

2. Device according to Claim 1, **characterized in that** the return conduit (3) extends along the outlet conduit (2) and is preferably formed in the discharge tube alongside the outlet conduit (2), in particular integrally moulded into the discharge tube.

3. Device according to Claim 1 or 2, **characterized in that** the outlet conduit (2) and the return conduit (3) are designed coaxially in the discharge tube.

4. Device according to one of Claims 1 to 3, **characterized in that** the spout element (12) forming the diversion channel (15) is plugged onto the main body (1) of the discharge tube.

5. Device according to one of Claims 1 to 4, **characterized in that** the valve block (7) can be connected to the container via a union nut (34).

6. Device according to one of Claims 1 to 5, **characterized in that** the outlet conduit (2) and the return conduit (3) are substantially the same length.

7. Device according to one of Claims 1 to 6, **characterized in that** the outlet opening of the outlet conduit (2) is arranged adjacent to an inlet opening of the return conduit (3).

8. Device according to one of Claims 1 to 7, **characterized in that** the spout element (12) is provided with a grip (17) for manually switching between the bypass position and the dispensing position.

9. Device according to Claim 8, **characterized in that** the spout element (12) can be switched to a closure position in which the discharge tube is shut off from the outside.

10. Device according to one of Claims 1 to 9, **characterized in that** the spout element (12) can be moved pivotably about a pivot axis that extends substantially in the longitudinal direction of the discharge tube.

11. Device according to one of Claims 1 to 10, **characterized in that** a liquid feed channel (9) and a liquid return channel (10) are formed in the valve block (7), said channels being accordingly connected to the outlet conduit (2) and the return conduit (3).

12. Device according to one of Claims 1 to 11, **characterized in that** a valve, in particular a ball valve, is arranged in the liquid path leading back into the container.

13. Device according to one of Claims 1 to 12, **characterized in that** the discharge tube is press-fitted into the valve block (7).

14. Device according to one of Claims 1 to 13, **characterized in that** the delivering or dosing cylinder (11) is formed in one piece with the valve block (7).

15. Device according to Claim 14, **characterized in that** the delivering or dosing cylinder (11) comprises a cylinder insert which is made from a glass, ceramic, thermoplastic or thermosetting synthetic material and which is received, in particular is injection moulded, in a jacket section (16) formed in one piece with the valve block (7).

16. Device according to one of Claims 1 to 13, **characterized in that** the delivering or dosing cylinder (11) is screwed into the valve block (7).

17. Device according to one of Claims 1 to 16, **characterized in that** the valve block (7) is designed as a skeleton construction with spaced webs.

18. Device according to Claim 17, **characterized in that** the valve block (7) is provided with a receiving recess for receiving a bottom section of the discharge tube, and the receiving recess is formed on the valve block (7) in such a way as to pass radially through a web extending in an axial plane.

19. Device according to one of Claims 1 to 18, **characterized in that** a discharge tube positioning mechanism is provided for fixing the position of the discharge tube on the valve block (7).

20. Device according to Claim 19, **characterized in that** the discharge tube positioning mechanism comprises an engagement section (8), which is formed on the discharge tube and which can be brought into engagement with a mating engagement section formed on the valve block.

21. Device according to Claim 18, **characterized in that** an engagement section is formed on the valve block (7) in the area of the receiving recess and can be brought into engagement with a mating engagement section of the discharge tube.

22. Discharge tube for a liquid dosing dispenser according to one of Claims 1 to 21, with a first channel arrangement (2) for dispensing a liquid via an outlet opening, and with a second channel arrangement (3) that extends along the first channel arrangement (2), said channel arrangements (2, 3) being provided in the discharge tube, and both channel arrangements (2, 3) being able to be connected in the area of the outlet opening such that a liquid delivered through the first channel arrangement (2) can be transferred into the second channel arrangement (3),
**characterized in that**
a spout element (12) is provided in the area of the outlet opening of the first channel arrangement (2) and is mounted pivotably or displaceably on a main body (1) of the discharge tube containing the outlet conduit (2),
a short diversion channel (15) is formed in the spout element (12),
the diversion channel (15), in a dispensing position of the spout element (12), diverts the liquid emerging from the outlet conduit (2), and the spout element (12) can be brought to a bypass position in which the liquid flowing out of the
outlet opening of the first channel arrangement (2) can be returned into the second channel arrangement (3).

23. Discharge tube according to Claim 22, **characterized in that** the discharge tube has an elongate main body (1), on one end of which the outlet opening is formed.

24. Discharge tube according to Claim 23, **characterized in that** the main body (1) has a plane front face (5), and **in that** the spout element (12) is placed onto the plane front face (5), and channels are preferably formed in the front face (5) of the main body (1) and in a front face of the spout element (12).

25. Discharge tube according to Claim 24, **characterized in that** at least one sliding disc (13, 14) is provided between the spout element (12) and the plane front face (5), said sliding disc (13, 14) having a through-opening which optionally forms a fluid connection between the outlet opening of the outlet conduit (2) and the return conduit (3).

26. Discharge tube according to one of Claims 23 to 25, **characterized in that** the first and second channel arrangements (2, 3) are formed parallel to each other and in particular are moulded integrally into the main body (1), in particular the wall respectively defining the first and second channel arrangements being formed by the main body (1).

27. Discharge tube according to one of Claims 23 to 26, **characterized in that** the main body (1), at its end directed away from the outlet opening, has a connecting portion (6) via which the main body (1) can be connected to a valve block (7) of the dosing dispenser.

28. Discharge tube according to Claim 27, **characterized in that** at least one of the first and second channel arrangements, in the area of the connecting portion (6), passes through a front end portion of the main body (1) or a circumferential outer surface of the main body (1).

29. Discharge tube according to Claim 27 or 28, **characterized in that** the connecting portion (6) of the discharge tube is formed as a pressed-in stub portion (8) or threaded stub.

30. Discharge tube according to one of Claims 23 to 29, **characterized in that**
the first channel arrangement (2) provided for dispensing the liquid via the outlet opening passes through the front end portion of the main body (1) and, by way of the inlet aperture thereby formed, is in fluid connection with a fluid feed channel (9) formed in the valve block (7),
and/or
the second channel arrangement forming the return conduit (3) passes through the circumferential outer surface of the main body (1) in the area of a securing portion, and the return aperture thereby formed is in fluid connection with a fluid return channel (10) formed in the valve block (7).

## Revendications

1. Dispositif pour distribuer un liquide comprenant un système de transport avec un cylindre de transport ou de dosage (11),
avec un piston de transport ou de dosage (18) déplaçable de manière alternative dans le cylindre de transport ou de dosage (11), qui limite dans le cylindre de transport ou de dosage (11) un espace de transport ou de dosage (19) de volume variable, pour transporter ou doser le liquide provenant d'un récipient dans une conduite d'écoulement (2),
avec une ouverture d'écoulement au niveau de laquelle le liquide transporté s'écoule hors de la conduite d'écoulement (2),
avec une conduite de retour (3) pour ramener le liquide dans le récipient,
avec un système d'ajustement (20) pour l'ajustement de la course du piston de transport ou de dosage (18),
avec un bloc de soupape (7) auquel est connecté le cylindre de transport ou de dosage (11), et qui est accouplé d'une part à une soupape du récipient (22) pour aspirer du liquide dans le cylindre de transport ou de dosage (11) et d'autre part à une soupape (30) pour transporter du liquide hors du cylindre de transport ou de dosage (11) dans la conduite d'écoulement (2), et
avec un tube d'évacuation qui est monté sur le bloc de soupape (7) et qui est réalisé dans la conduite d'écoulement (2),
**caractérisé en ce que**
le tube d'évacuation est pourvu sur son extrémité opposée au bloc de soupape (7) d'un élément verseur (12) qui est monté de manière pivotante ou coulissante sur un corps de base (1), contenant la conduite d'écoulement (2), du tube d'évacuation,
**en ce que** dans l'élément verseur (12) est réalisé un canal de déviation court (15),
**en ce que** dans une position de distribution de l'élément verseur (12), le canal de déviation (15) dévie verticalement vers le bas le liquide sortant de la conduite d'écoulement (2) et
**en ce que** dans une position de contournement de l'élément verseur (12), la conduite d'écoulement (2) est connectée à la conduite de retour (3).

2. Dispositif selon la revendication 1, **caractérisé en ce que** la conduite de retour (3) s'étend le long de la conduite d'écoulement (2) et est réalisée de préférence dans le tube d'évacuation à côté de la conduite d'écoulement (2), notamment est formée intégralement dans le tube d'évacuation.

3. Dispositif selon la revendication 1 ou 2, **caractérisé en ce que** la conduite d'écoulement (2) et la conduite de retour (3) sont réalisées coaxialement dans le tube d'évacuation.

4. Dispositif selon l'une quelconque des revendications 1 à 3, **caractérisé en ce que** l'élément verseur (12) formant le canal de déviation (15) est enfiché sur le corps de base (1) du tube d'évacuation.

5. Dispositif selon l'une quelconque des revendications 1 à 4, **caractérisé en ce que** le bloc de soupape (7) peut être connecté au récipient par le biais d'un écrou d'accouplement (34).

6. Dispositif selon l'une quelconque des revendications 1 à 5, **caractérisé en ce que** la conduite d'écoulement (2) et la conduite de retour (3) sont réalisées essentiellement avec la même longueur.

7. Dispositif selon l'une quelconque des revendications 1 à 6, **caractérisé en ce que** l'ouverture de sortie de la conduite d'écoulement (2) est disposée à côté d'une ouverture d'entrée de la conduite de retour (3).

8. Dispositif selon l'une quelconque des revendications 1 à 7, **caractérisé en ce que** l'élément verseur (12) est pourvu d'un système de préhension (17) pour commuter manuellement entre la position de contournement et la position de distribution.

9. Dispositif selon la revendication 8, **caractérisé en ce que** l'élément verseur (12) peut être commuté dans une position de fermeture dans laquelle le tube d'évacuation est bloqué vers l'extérieur.

10. Dispositif selon l'une quelconque des revendications 1 à 9, **caractérisé en ce que** l'élément verseur (12) peut être déplacé de manière pivotante autour d'un axe de pivotement qui s'étend essentiellement dans la direction longitudinale du tube d'évacuation.

11. Dispositif selon l'une quelconque des revendications 1 à 10, **caractérisé en ce que** dans le bloc de soupape (7) sont réalisés un canal d'alimentation en liquide (9) et un canal de retour de liquide (10), qui sont connectés de manière correspondante à la conduite d'écoulement (2) et à la conduite de retour (3).

12. Dispositif selon l'une quelconque des revendications 1 à 11, **caractérisé en ce que** dans la course de liquide ramenant dans le récipient est disposée une soupape, notamment une soupape sphérique.

13. Dispositif selon l'une quelconque des revendications 1 à 12, **caractérisé en ce que** le tube d'évacuation est pressé dans le bloc de soupape (7).

14. Dispositif selon l'une quelconque des revendications 1 à 13, **caractérisé en ce que** le cylindre de transport ou de dosage (11) est réalisé d'une seule pièce avec le bloc de soupape (7).

15. Dispositif selon la revendication 14, **caractérisé en ce que** le cylindre de transport ou de dosage (11) comprend un insert cylindrique formé en un matériau en verre, en céramique, ou en plastique thermoplastique ou duroplastique, qui est reçu, notamment par injection, dans une portion d'enveloppe (16) réalisée d'une seule pièce avec le bloc de soupape (7).

16. Dispositif selon l'une quelconque des revendications 1 à 13, **caractérisé en ce que** le cylindre de transport ou de dosage (11) est vissé dans le bloc de soupape (7).

17. Dispositif selon l'une quelconque des revendications 1 à 16, **caractérisé en ce que** le bloc de soupape (7) est réalisé sous forme de construction squelette avec des nervures espacées.

18. Dispositif selon la revendication 17, **caractérisé en ce que** le bloc de soupape (7) est pourvu d'un évidement de réception pour recevoir une portion de base du tube d'évacuation, l'évidement de réception étant réalisé sur le bloc de soupape (7) de telle sorte qu'il traverse radialement une nervure s'étendant dans un plan axial.

19. Dispositif selon l'une quelconque des revendications 1 à 18, **caractérisé en ce que** l'on prévoit un système de positionnement de tube d'évacuation, pour fixer la position du tube d'évacuation sur le bloc de soupape (7).

20. Dispositif selon la revendication 19, **caractérisé en ce que** le système de positionnement de tube d'évacuation présente une portion d'engagement (8) réalisée du côté du tube, qui peut être amenée en prise avec une portion d'engagement conjuguée réalisée du côté du bloc de soupape.

21. Dispositif selon la revendication 18, **caractérisé en ce qu'**une portion d'engagement est réalisée sur le bloc de soupape (7) dans la région de l'évidement de réception, laquelle peut être amenée en prise avec une portion d'engagement conjuguée du tube d'évacuation.

22. Tube d'évacuation pour un distributeur doseur de liquide selon l'une quelconque des revendications 1 à 21, comprenant un premier système de canal (2) pour distribuer un liquide par le biais d'une ouverture de sortie et un deuxième système de canal (3) qui s'étend le long du premier système de canal (2), les systèmes de canaux (2, 3) étant prévus dans le tube d'évacuation et les deux systèmes de canaux (2, 3) pouvant être connectés pour le transfert d'un liquide transporté par le premier système de canal (2) dans le deuxième système de canal (3) dans la région de l'ouverture de sortie,
**caractérisé en ce que**
dans la région de l'ouverture de sortie du premier système de canal (2), un élément verseur (12) est prévu, lequel est monté de manière pivotante ou coulissante sur un corps de base (1), contenant la conduite d'écoulement (2), du tube d'évacuation,
**en ce que** dans l'élément verseur (12) est réalisé un canal de déviation court (15),
**en ce que** dans une position de distribution de l'élément verseur (12), le canal de déviation (15) dévie le liquide sortant de la conduite d'écoulement (2) et
**en ce que** l'élément verseur (12) peut être amené dans une position de contournement, dans laquelle le liquide s'écoulant hors de l'ouverture de sortie du premier système de canal (2) peut être ramené dans le deuxième système de canal (3).

23. Tube d'évacuation selon la revendication 22, **caractérisé en ce que** le tube d'évacuation présente un corps de base allongé (1) sur une extrémité duquel est réalisée l'ouverture de sortie.

24. Tube d'évacuation selon la revendication 23, **caractérisé en ce que** le corps de base (1) présente une surface frontale plane (5) et **en ce que** l'élément verseur (12) est posé sur la surface frontale plane (5), et de préférence, des canaux sont réalisés dans la surface frontale (5) du corps de base (1) et dans une surface frontale de l'élément verseur (12).

25. Tube d'évacuation selon la revendication 24, **caractérisé en ce qu'**au moins une rondelle de glissement (13, 14) est prévue entre l'élément verseur (12) et la surface frontale plane (5), la rondelle de glissement (13, 14) présentant une ouverture de passage qui forme de manière sélective une connexion fluidique entre l'ouverture de sortie de la conduite d'écoulement (2) et la conduite de retour (3).

26. Tube d'évacuation selon l'une quelconque des revendications 23 à 25, **caractérisé en ce que**
le premier et le deuxième système de canal (2, 3) sont réalisés parallèlement l'un à l'autre et notamment sont formés intégralement dans le corps de base (1), notamment la paroi définissant à chaque fois le premier et le deuxième système de canal est formée par le corps de base (1).

27. Tube d'évacuation selon l'une quelconque des revendications 23 à 26, **caractérisé en ce que**
le corps de base (1) présente sur son extrémité opposée à l'ouverture de sortie une portion de connexion (6) par le biais de laquelle le corps de base (1) peut être connecté à un bloc de soupape (7) du distributeur doseur.

28. Tube d'évacuation selon la revendication 27, **caractérisé en ce qu'**au moins l'un des premier et deuxième systèmes de canaux dans la région de la portion de connexion (6) traverse une portion d'extrémité frontale du corps de base (1) ou une surface extérieure périphérique du corps de base (1).

29. Tube d'évacuation selon la revendication 27 ou 28, **caractérisé en ce que** la portion de connexion (6) du tube d'évacuation est réalisée sous forme de portion de tourillon à enfoncer (8) ou sous forme de tourillon fileté.

30. Tube d'évacuation selon l'une quelconque des revendications 23 à 29, **caractérisé en ce que**
le premier système de canal (2) prévu pour distribuer le liquide par le biais de l'ouverture de sortie traverse la portion d'extrémité frontale du corps de base (1) et est en liaison fluidique par le biais de l'embouchure d'entrée ainsi formée, avec un canal d'amenée de fluide (9) formé dans le bloc de soupape (7)
et/ou
le deuxième système de canal formant la conduite de retour (3) traverse la surface extérieure périphérique du corps de base (1) dans la région d'une portion de fixation et l'embouchure de retour ainsi formée est en liaison fluidique avec un canal d'écoulement de fluide sous pression (10) formé dans le bloc de soupape (7).
